# EUROPEAN PATENT APPLICATION

(11) **EP 3 376 183 A1**
(43) Date of publication of application: **19.09.2018**
(21) Application number: 18161776.2
(22) Date of filing: 14.03.2018
(51) Int. Cl.: G01G 13/06, G01G 13/02

(54) **DOSING DEVICE FOR COSMETIC POWDER**

(30) Priority: 16.03.2017 IT 201700029013
(71) Applicant: CMI Engineering S.r.l., 20123 Milano (IT)
(72) Inventor: MERLO, Luigi, 20871 VIMERCATE (MB) (IT); MARGAGLIOTTI, Luca Daniele, 26854 CORNEGLIANO LAUDENSE (LO) (IT)
(74) Representative: Di Gennaro, Sergio

(57) **Abstract**

Device for dosing cosmetic powder comprising a refining module (2) and a homogenisation module (3) placed in series.

Such refining module comprises a first hopper (21) for collecting the powder introduced in the module, at whose outlet mouth a housing (22) for a refining grid (23) is present, a rotating screw (24) being present along the longitudinal axis of such hopper.

Such homogenisation module essentially comprises a second hopper (31) for collecting powder inside which a rotating plate (32) is provided equipped with at least one ring (33) of fins.

The outlet mouth of the first hopper is arranged in proximity to the inlet mouth of the second hopper to allow the passage of the powder from the refining module to the homogenisation one.

## Description

The present invention relates to a device for dosing cosmetic powder. In particular, the present invention relates to a dosing device that comprises a refining module and a homogenisation module, placed in series. Furthermore, upstream of such refining module, there may be a supply and transport module.

Examples of such cosmetic powders are face powder, compact foundation, bronzing powder, blusher, eye shadow and body powder. It is known that after its production process cosmetic powder must be appropriately treated to be packaged in conventional containers or cases.

The production process envisages the powder being weighed, pigments, binders and auxiliary products being added to it, and its collection in a relevant mill. Subsequently, the treatment envisages refining and sieving being performed. Finally, the powder thus processed is pressed and then packaged.

The cosmetic powder tends to agglomerate after the production process even after the above-indicated refining and sieving steps. One of the factors that leads to this phenomenon is the electrostaticity of the cosmetic powder and a second is its hygroscopy. Cosmetic powder is very sensitive to the residual humidity percentage present inside it and to the atmospheric/seasonal conditions, even when working in environments with constant and controlled temperature and humidity.

For these reasons, often even after refining and sieving, further sieving is necessary before the pressing or compacting process. This implies costs (for personnel) and slower working cycles, due to the addition of an operation not envisaged in the process.

Furthermore, there is often incomplete homogenisation of the base with the pigments and the binder, which leads to having a nonhomogeneous cosmetic powder with the presence of white spots or spots of pigment or undesired visual effects due to the binder.

These problems are not resolvable during the final compacting transformation and therefore the cosmetic powder is rejected by the analysis step (quality control) which usually requires the repetition of the refining and sieving steps to bring it back into conformity.

The object of the present invention is that of solving the aforementioned drawbacks by providing a device having the characteristics of the appended claim 1.

The characteristics and advantages of the present invention will become more apparent from the following description of an embodiment of the invention, provided by way of non-limiting example, with reference to the schematic attached drawings, wherein:

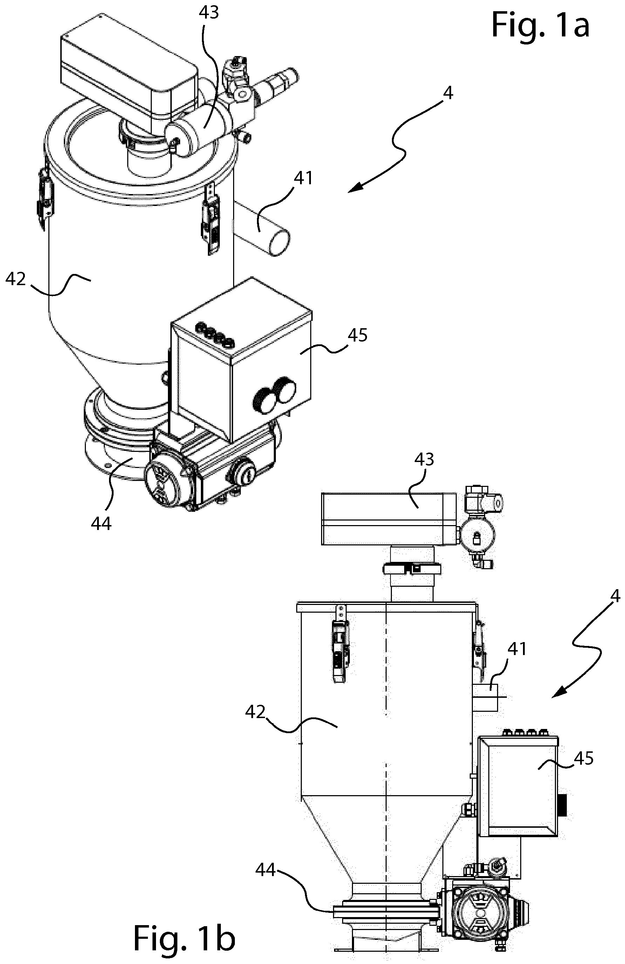

- figures 1a and 1b illustrate a perspective and front view, respectively, of a transport and loading module of the dosing device according to the present invention;

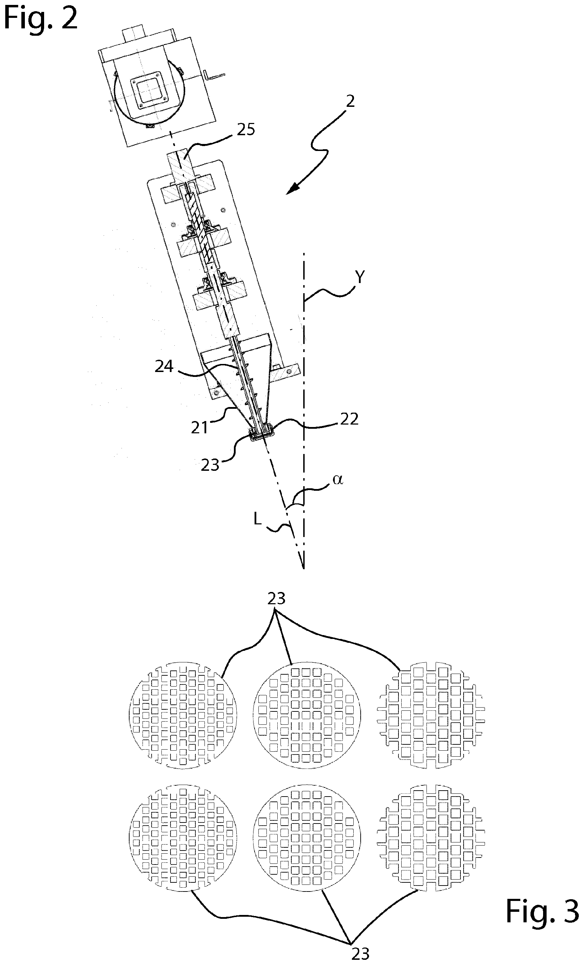

- figure 2 illustrates a schematic view of the refining module of the dosing device according to the present invention;
- figure 3 illustrates some suitable types of grid for the refining module;

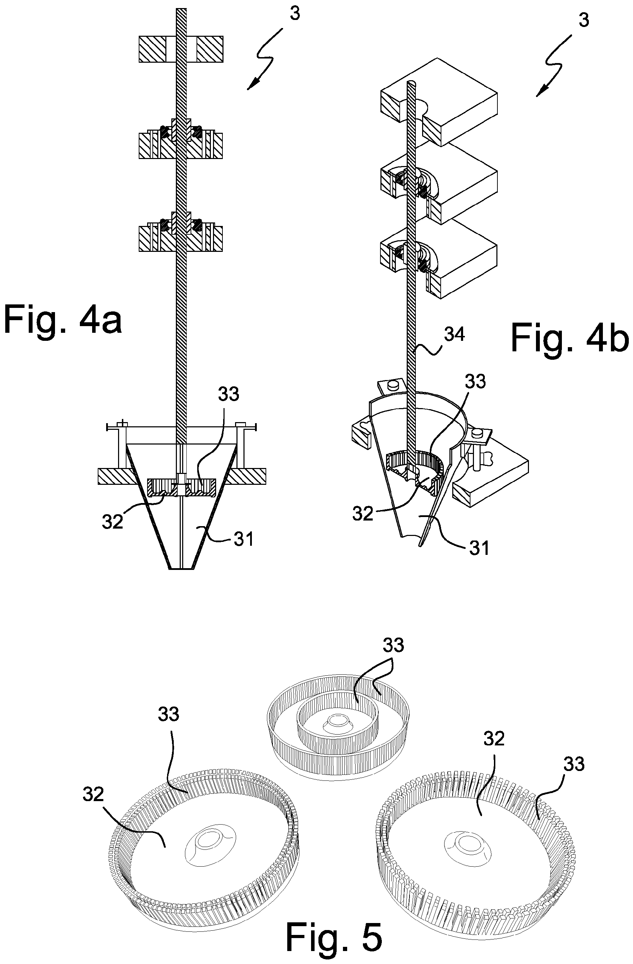

- figures 4a and 4b illustrate a schematic front view and a broken away perspective view, respectively, of the homogenisation module of the dosing device according to the present invention;
- figure 5 illustrates some suitable types of plate with fins for the homogenisation module;
- figure 6 illustrates a schematic view of the three modules placed in series.

With reference to the cited figures, the dosing device according to the present invention comprises a refining module 2 and a homogenisation module 3.

Furthermore, the device may also comprise a module 4 for supplying and transporting the cosmetic powder, adapted to automatically convey the powder from a pickup station to the refining module.

The device according to the present invention may be arranged in the process for producing the powder described in the preamble of the present patent, downstream of the mentioned powder sieving and homogenisation steps before the powder pressing and compacting step for its insertion in the package or case.

Alternatively, the device according to the present invention can be applied in the post-production of the cosmetic powder.

In this way, there is further refining and homogenisation of the powder prior to its pressing and compacting into homogeneous blocks.

The device according to the present invention, being made completely automatically and arranged in series with the subsequent pressing step, does not determine any production delays and above all prevents the product having to go back at the end of the standard refining and sieving steps in order to repeat the two mentioned process steps.

The refining module 2 comprises a first substantially frusto-conical portion 21 that defines a first hopper for collecting the powder, at whose outlet mouth a housing 22 for a refining grid 23 is present.

A rotating screw 24 is present along the longitudinal axis of such hopper, put in rotation by the first motorised means 25. The module is preferably positioned at an inclination with respect to the vertical. A suitable angle α of inclination of the longitudinal axis L with respect to the vertical Y is comprised between 22° and 28°, preferably 25°.

Such module refines the powder without a sieve, but through a hopper and a screw where the powder, by gravity, coupled with the thrust of the screw, breaks the lumps of powder through the grids with particular meshes designed according to the type of cosmetic powder. The system is to be mounted with a particular attachment angle (**25° ±3°**) so as not to allow the powder to settle and become re-compacted in lumps.

The homogenisation module essentially comprises a second substantially frusto-conical portion 31 that defines a second hopper for collecting powder inside which a plate 32 is provided equipped with at least one ring 33 of preferably vertical fins. Such rings of fins may be placed on the outer edge of the plate and/or placed on intermediate circumferences. Such plate is positioned substantially horizontal, in axis with the hopper and is put in rotation around its centre by means of a shaft 34 which is vertically extended in the module. Such shaft is put in rotation by appropriate second motor means. The softer powder that is free from lumps falls into the plate; the fins are created ad-hoc with different systems of tapering and shape thereof, according to the different types of powder and encountered problem to be solved. The plate rotates creating whirls of powder inside the plate that perfectly homogenise the cosmetic powder. Due to the centrifugal effect the powder passes from the fins of the plate and falls towards the tip of the hopper. By means of the fins and the rotation speed of the plate, in addition to the homogenisation, also a further "breakage" of any smaller lumps than the mesh of the overlying grid takes place. The kinetic energy of the powder ensures that it does not settle in the containment hopper, which is kept in vibration through vibrating means.

This system allows a controlled dosing of the powder to pass through a nozzle designed to keep the powder soft and fluffy in the cavity of the mould or in packaging in relation to the filling of loose powders.

The supply and transport module 4 comprises a suction channel 41 that, by means of a nozzle or appropriate pipe (not shown), picks up the powder from the pickup station, which may be a powder silo, a bag or a package in general. From such channel, the product is introduced into a tank 42 placed in the body of the module through a suction pump 43 which generates the depression in such tank allowing the suction of the powder.

Below such tank an exhaust valve 44 is provided, that releases the product regulating the outflow thereof. A control panel 45 allows the activation and the operation of such module.

The transport of the cosmetic powder from the pickup station after the production process takes place through a nozzle and a system that allows the powder to be kept in its container, without having to continuously transport it from the bag to the loading hopper or to the flat compacting side of the machine.

The movement of the powder takes place in a closed system, without movement of the powder through shovels, and prevents the contamination of the powder. It eliminates wasted powder due to accidental causes and manual transport. Small quantities of powder can be transported so as to use this system for a first controlled weight dosing.

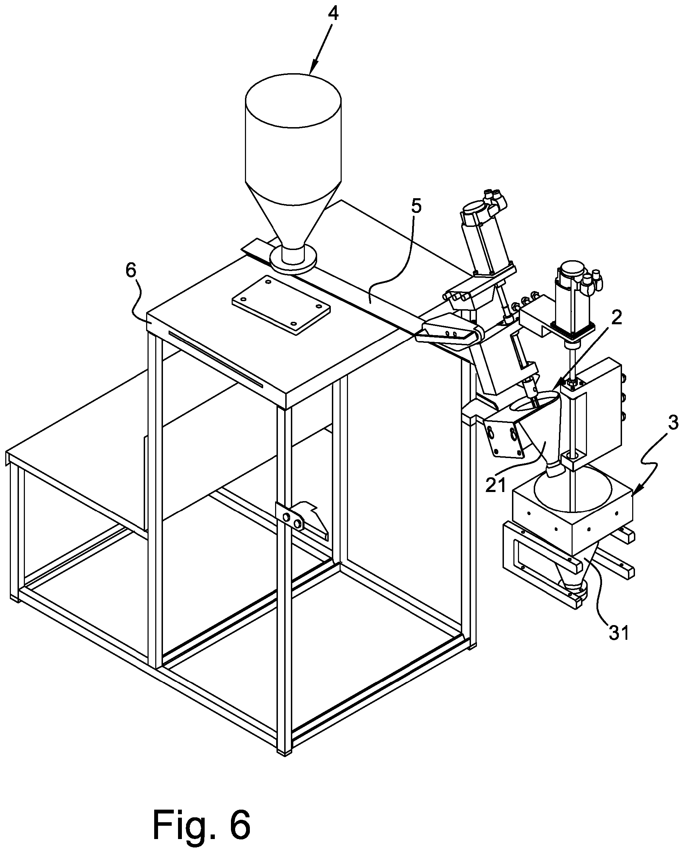

Figure 6 shows the reciprocal positioning of the three modules. In particular, the supply module 4 is positioned above and to the side of the refining module. Appropriate transport means, e.g. a vibrating channel, take the powder from the supply module to the supply mouth of the first hopper 21. The vibrating channel also contributes to grinding the lumps of powder that tend to form in the storage.

Such refining module 3 is positioned inclined and the outlet mouth of its hopper 21 is positioned in proximity to the supply mouth of the second hopper 31 of the homogenisation module. The positioning of the three modules is promoted by the presence of a support frame 6.

## Claims

1. Device for dosing cosmetic powder comprising a refining module (2) and a homogenisation module (3) placed in series,
such refining module comprises a first hopper (21) for collecting the powder introduced in the module, at whose outlet mouth a housing (22) for a refining grid (23) is present, a rotating screw (24) being present along the longitudinal axis of such hopper,
such homogenisation module essentially comprises a second hopper (31) for collecting powder inside which a rotating plate (32) is provided equipped with at least one ring (33) of fins,
the outlet mouth of the first hopper being arranged in proximity to the inlet mouth of the second hopper to allow the passage of the powder from the refining module to the homogenisation one.

2. Device according to claim 1, further comprising a module (4) for supplying and transporting the powder adapted to automatically convey the powder from one pickup station to the inlet mouth of the first hopper (21).

3. Device according to claim 1, wherein the refining module is positioned inclined with respect to the vertical.

4. Device according to claim 1, wherein the second hopper (31) is provided with means that cause it to vibrate.

5. Device according to claim 3, wherein a suitable angle (α) of inclination of the longitudinal axis L with respect to the vertical (Y) is comprised between 22° and 28°, preferably 25°.

6. Device according to claim 1, wherein such plate is positioned substantially horizontal, in axis with the hopper and is put in rotation around its centre by means of a shaft (34) which is vertically extended in the module.

7. Device according to claim 1, wherein such fins are positioned vertically.

8. Device according to claim 1, wherein such rings of fins may be placed on the outer edge of the plate and/or placed on intermediate circumferences.

9. Device according to claim 1, wherein such supply and transport module comprises a suction channel (41) that, by means of a nozzle, picks up the powder from the pickup station and introduces it into a tank (42) through a suction pump (43) which creates a vacuum in such tank, an exhaust valve (44) that releases the product regulating the outflow thereof from the tank.

10. Device according to claim 9, wherein such supply and transport module comprises transport means that carry the powder from the exhaust valve to the supply mouth of the first hopper (21).

11. Device according to claim 10, wherein such transport means comprise a transport channel (5) provided with means for vibrating the channel itself.
